# EUROPEAN PATENT APPLICATION

(11) **EP 4 325 073 A1**
(43) Date of publication of application: **21.02.2024**
(21) Application number: 22191261.1
(22) Date of filing: 19.08.2022
(51) Int. Cl.: F16C 19/06, F16C 19/16, F16C 19/26, F16C 33/38, F16C 33/46

(54) **CAGE FOR A ROLLING ELEMENT BEARING**

(71) Applicant: Apo-Gee Engineering S.r.l., 4102 Ougrée (BE)
(72) Inventor: Servais, Christophe, 4130 Esneux (BE)
(74) Representative: Calysta NV

(57) **Abstract**

A cage for a rolling element bearing, wherein the cage comprises an irregular cage radius, wherein cage comprises a first limited region wherein the irregular cage radius remains within a limited range, a first protrusion range where the irregular cage radius extends out of the limited range, a second limited region wherein the irregular cage radius remains within the limited range, and a second protrusion range where the irregular cage radius extends out of the limited range.

## Description

The present invention relates to the field of rolling element bearings, in particular to a cage for a rolling element bearing, wherein said rolling element bearing has, in particular, an outer ring and an inner ring, wherein an inner radius of the outer ring is greater than an outer radius of the inner ring.

Rolling element bearings, including e.g. roller bearings and ball bearings, are very widespread mechanical components that are used in a variety of applications, ranging from bicycles to airplane engines. Generally speaking, the role of these types of bearing is to separate parts that rotate relative to each other. In most cases, the bearing comprises an inner ring and an outer ring, which are separated by a set of rolling elements. The rolling elements allow the inner ring and outer ring to rotate relative to each other.

The rolling elements are usually provided in a cage, sometimes also referred to as separator or retainer. The cage has holes or pockets for the rolling elements. Usually the cage is guided by either the outer ring or the inner ring. The inner and outer ring are sometimes also referred to as inner and outer race.

It has been found that the cage may suffer from dynamic instabilities, which may lead to failure of the cage. These instabilities may include erratic motion of the cage between the inner and outer ring. Failures occur in particular when the working conditions are demanding, for example when lubricating during use is hard or even impossible. This is e.g. the case for bearings used in turbo-pumps of rocket engines, satellites, and space probes. Also in applications where a high rpm is required, dynamic instabilities may occur more often and lead to failures. Failures and misbehaviours have been reported in such projects, where a failure of a relatively small component has enormous consequences for a very expensive project. However, also in more conventional application such as automotive, machining, and aeronautics, cage failures due to instabilities have been reported.

Although the problem of cage instabilities has been known for a long time and is extensively reported and studied in the literature, no satisfying solutions have been proposed yet.

It is an object of the invention to reduce failures due to cage instabilities, or at least provide an alternative to the prior art.

This object is achieved with a cage for a rolling element bearing, wherein the cage comprises an irregular cage radius, wherein the irregular cage radius is
- an outer cage radius which defines an outer circumference of the cage, and/or
- an inner cage radius which defines an inner circumference of the cage,
wherein the cage comprises:
- a first limited region, wherein the irregular cage radius remains within a limited range between a lower limit and an upper limit,
- a first protrusion region, wherein the cage comprises at least one point where the irregular cage radius extends outside the limited range, wherein the first protrusion region adjoins the first limited region in circumferential direction;
- a second limited region, wherein the irregular cage radius remains within the limited range, wherein the second limited region adjoins the first protrusion region in circumferential direction;
- a second protrusion region, wherein the cage comprises at least one point where the irregular cage radius extends outside the limited range, wherein the second protrusion region adjoins the second limited region in circumferential direction, and the first limited region adjoins the second protrusion region in circumferential direction.

The invention thus relates to a cage for a rolling element bearing. The rolling element bearing can e.g. be a roller bearing or a ball bearing. The rolling element bearing may be configured to be used with or without lubrication. Preferably, the rolling element bearing has an outer ring and an inner ring, wherein an inner radius of the outer ring is greater than an outer radius of the inner ring. Thus, the outer ring larger than the inner ring when seen in radial direction. In other words, the rolling element bearing is not a so-called thrust bearing or the like. For example, the rolling element bearing is configured to support radial loads.

The cage may be configured to be guided by an outer ring of the rolling element bearing or an inner ring of the rolling element bearing. The cage may comprise a plurality of pockets for the rolling elements. The pockets may be arranged in a single row or in multiple rows, e.g. two rows. The cage may be made of any suitable material, e.g. a polymer, a composite such as glass fibre and additional resin, a metal such as steel or brass. The cage can be of any type, e.g. stamped cage, monobloc cage or pin-type cage. The cage can be monolithic or made of multiple parts, e.g. two parts.

The cage can e.g. be considered to comprise an outer cage radius and an inner cage radius. The outer cage radius defines an outer circumference of the cage, and the inner radius an inner circumference. It may e.g. be possible to define a thickness of the cage between the inner cage radius and the outer cage radius, e.g. in radial direction. A width of the cage can optionally be defined in a longitudinal direction. It will be understood that when seen in the longitudinal direction, the radius may not be constant over the width, for example because pockets are provided for the rolling elements. In the context of this invention, said pockets may be ignored for determining the inner and outer cage radius.

At least one of the inner cage radius and the outer cage radius is an irregular cage radius. In this context, irregular entails that the respective cage radius is not constant when seen over respective circumference. It will be understood that although the cage is not completely annular (since at least one of the inner and outer radius is not completely circular), radius is this context is intended to refer to the distance between a given point on the inner or outer circumference, respectively, and a centre point of the cage. It is possible that one of the inner and outer cage radius is an irregular cage radius, or both of them are irregular cage radii.

When seen in the circumferential direction (i.e. angular direction), the cage can be divided into four regions, including a first limited region, which adjoins a first protrusions region. The first protrusion region in turn adjoins a second limited region. The second limited region in turn adjoins a second protrusion region. The second protrusion region finally adjoins the first limited region. Thus, these four regions cover the complete circumference of the cage, and there are no further regions.

A limited range is defined between a lower limit and an upper limit, wherein the lower limit may be smaller than or equal to the upper limit. In the first and second limited region, the irregular cage radius stays within the limited range. It is noted that it is nevertheless possible that the irregular cage radius is inconstant while staying within the limited range, as long as the lower limit and the upper limit are not exceeded.

In the first and second protrusion region, the irregular cage radius extends outside the limited range. That is, the irregular cage radius either is larger than the upper limit or smaller than the lower limit. Preferably, the irregular cage radius extends outside the limited range in the same manner in both the first and second protrusion region. That is, the irregular cage radius is either larger than the upper limit in both the first and second protrusion region, or smaller than the lower limit in both the first and second protrusion region. For example, if the irregular cage radius is the outer cage radius, said irregular cage radius is larger than the upper limit on at least one point in both the first and second protrusion region. For example, if the irregular cage radius is the inner cage radius, said irregular cage radius is smaller than the lower limit on at least one point in both the first and second protrusion region. The irregular cage radius extends outside the limited range at one or than more one point (or location) in the first and second protrusion region, wherein it is possible that the irregular cage radius returns to the limited region between two points (or locations) where it extends outside the limited range.

The inventors have found that, advantageously, having exactly two protrusion regions and two limited regions, reduces the instabilities of the cage and consequently also the failures. It is theorized that this is because the protrusion regions determine where contact can be made between the cage and either the outer or inner ring when an instability occurs. The possible contact points between the cage and the respective ring are thus predefined in distinct regions. When contact is made, the protrusion regions cause the cage to be centred back, such that any instability is reduced. In comparison, when a cage without protrusion regions (i.e. when the cage only has constant inner and outer radius) is used, the entire circumference can be a contact point. This makes the contact unpredictable and causes the cage to "bounce" around while contact occurs at different contact points. If, on the other hand, more than two protrusion regions are used, the advantages of the invention are not achieved either. This is assumed to be because in those cases more possible contact points are created which are distributed over the circumference of the cage, which again causes the cage to "bounce" around while contact occurs unpredictably at the different contact points.

In embodiments, the first limited region covers at least a circumferential region of 45 degrees, for example at least 60 degrees. In embodiments, the second limited region covers at least a circumferential region of 45 degrees, for example at least 60 degrees. The inventors have found that if the first and second limited region are too small and hence the first and second protrusion region are too large, an unstable motion of the cage may still occur

In embodiments, the first limited region covers at least a circumferential region of 90 degrees, for example at least 120 degrees, for example at least 130 degrees, for example at least 150 degrees. In embodiments, the second limited region covers at least a circumferential region of 90 degrees, for example at least 120 degrees, for example at least 150 degrees. The inventors have found that if the first and second limited region together cover more than half of the circumference of the cage, the possible contact points between cage and respective ring are reduced by so much that any "bouncing" effect is practically eliminated.

In embodiments, the first and second limited region are larger than the first and second protrusion region. That is, the first limited region is larger than the first protrusion region, and larger than the second protrusion region. The second limited region is also larger than the first protrusion region, and larger than the second protrusion region. The inventors have found that this further reduces the chance of an unstable motion of the cage.

In embodiments, the irregular cage radius is inconstant in the first and/or second limited regions, when seen in circumferential direction. Thus, the irregular cage radius may vary in the first and/or second limited region, while remaining within the limited range. The lower limit of the limited range is smaller than the upper limit. The inventors have found that advantageously, these embodiments further reduce the dynamic instabilities.

In embodiments, the first protrusion region and the second protrusion region are symmetric, and optionally also the first limited region and the second limited region are symmetric. The symmetry may be advantageous for production, as well as for limiting rotational unbalance during use. In addition, the symmetry in possible contact points between the cage and respective ring further reduces instabilities. The symmetry can e.g. be a symmetry in view of a line of reflection, wherein said line of reflection extends through a centre point of the cage, wherein said line of reflection may e.g. be a centre line. The symmetry can e.g. be a symmetry in view of a point of reflection, wherein said point of reflection can be a centre point of the cage. The cage can further be rotationally symmetric when the cage is rotated by 180 degrees. It is noted that, in practice, small deviations from the symmetry are possible, e.g. within manufacturing tolerances.

In embodiments, the upper and lower limit of the limited region are between an outer radius of the inner ring and an inner radius of outer ring.

For example, when the irregular cage radius is the outer cage radius, the irregular cage radius may exceed the upper limit in the protrusion regions. In this case, the lower limit can be selected in function of the thickness of the cage, the outer radius of the inner ring of the rolling element bearing, and the required space between the cage and the inner ring. This is in practice quite similar to the design of a conventional cage. The distance between the lower limit and the inner radius of the outer ring can be divided in three zones, having a first zone between the lower limit and the upper limit, a second zone between the upper limit and a protrusion limit, and a third zone between the protrusion limit and the inner radius of the outer ring. The protrusion limit is a maximal radius of the irregular cage radius in the first and second protrusion region. The first zone may e.g. be defined to allow a thickness of the cage that ensures sufficient strength of the cage, similar to conventional cage designs. The third zone may e.g. be defined by the required space between cage and outer ring to allow movement, also similar to conventional cage designs. The second zone may e.g. be equal in size to the third zone. In some embodiments, the second and third zone are a few orders of magnitude smaller than the first zone.

For example, when the irregular cage radius is the inner cage radius, the irregular cage radius may be smaller than the lower limit in the protrusion regions. In this case, the upper limit can be selected in function of the thickness of the cage, the inner radius of the outer ring of the rolling element bearing, and the required space between the cage and the outer ring. This is in practice quite similar to the design of a conventional cage. The distance between the upper limit and the outer radius of the inner ring can be divided in three zones, having a first zone between the upper limit and the lower limit, a second zone between the lower limit and a protrusion limit, and a third zone between the protrusion limit and the outer radius of the inner ring. The protrusion limit is in this case a minimal radius of the irregular cage radius in the first and second protrusion region. The first zone may e.g. be defined to allow a thickness of the cage that ensures sufficient strength of the cage, similar to conventional cage designs. The third zone may e.g. be defined by the required space between cage and inner ring to allow movement, similar to conventional cage designs. The second zone may e.g. be equal in size to the third zone. In some embodiments, the second and third zone are a few orders of magnitude smaller than the first zone.

In embodiments, the irregular cage radius is configured such that contact between the irregular cage radius and the outer or inner ring, respectively, is only possible in the first and second protrusion region, e.g. only at a point where the irregular cage radius extends outside the limited range. In particular, the upper and lower limit of the limited range can be defined accordingly, optionally in function of a protrusion limit of the irregular cage radius in the first and second protrusion as well as the inner radius of the outer ring or the outer radius of inner ring.

In embodiments, the first and/or second protrusion region each comprise a single protrusion extending outside the limited range. Thus, exactly one protrusion extends outside the limited range in the first and/or second protrusion region. Said protrusion may e.g. define the protrusion limit. These embodiments may be relatively simple in production. The protrusion may cover the entire protrusion region, or be smaller than the protrusion region. The protrusion may entail a constant irregular cage radius for a part of the protrusion region, e.g. having a conical shape with a plateau. It is also possible that the protrusion entails an inconstant cage radius, e.g. having a conical shape with a (rounded) tip.

In embodiments, the first and/or second protrusion region each comprise a plurality of protrusion extending outside the limited range, for example at least two, three, four, or five protrusions. The protrusion extending the furthest outside the limited range may define the protrusion limit. These embodiments may be advantageous to reduce the dynamic instability. The protrusions may entail a constant irregular cage radius for a part of the protrusion region, e.g. having a conical shape with a plateau. It is also possible that the protrusions entail an inconstant cage radius, e.g. having a conical shape with a (rounded) tip.

In embodiments, the irregular cage radius is constant in the first and/or second limited region. Thus, the irregular cage radius is the same in the entire first and/or second limited region. There are no protrusions in these regions. Of course, the cage may still comprise pockets for the rolling elements in this region. These embodiments may be relatively simple in production. In these embodiments, the upper limit and lower limit of the limited range may e.g. be equal to each other.

In embodiments, the cage comprises a plurality of pockets for rolling elements. The pockets may e.g. be provided in a single row or a double row. Optionally, except for the pockets, the irregular radius extends outside the limited range at any point of the cage when seen in over the width in a longitudinal direction. Optionally, the irregular radius is constant at any point of the cage when seen over the width in a longitudinal direction.

In embodiments, the cage is monolithic. Thus, the cage is made from a unitary element. The cage can e.g. be machined, moulded or 3D-printed.

In embodiments, the cage is made of two elements that are attached to each other, e.g. riveted. For example, the cage can be split in two elements when seen in longitudinal direction, each element comprising half of the pockets. During installation, said half pockets can be arranged around the rolling elements and the two elements can be attached to each other to form the pockets around the rolling elements and to form the cage.

In embodiments, the protrusions are elements arranged onto the cage. For example, the protrusions are riveted, glued, or screwed.

In embodiments, the protrusions have any one of a rounded profile, a rectangular profile, a square profile, an oval profile, an ellipse profile.

In embodiments, the cage is configured to be used in a non-lubricated rolling element bearing or in a marginally lubricated rolling element bearing. In particular in applications where lubrication is hard or impossible to provide, cage failures occur regularly, which can advantageously be reduced with the cage according to the invention. Within the technical field, a marginal lubrication refers to a situation in which only little lubricant is provided within the bearing. As a result, balls and rings are not completely separated from each other by a lubricant film.

In embodiments, the irregular cage radius is the outer cage radius, wherein in the first and the second protrusion region the irregular cage radius exceeds outside the limited range by exceeding the upper limit. Optionally, the cage is configured to be guided by an outer ring of the rolling element bearing. When the cage is being guided by outer ring, any contact between the cage and rolling element bearing occurs with the outer ring. Therefore, the protrusion regions can be arranged to extend beyond the upper limit, to ensure that the contact of the cage is made with one of said protrusion regions.

In these embodiments, the cage can also be described as: a cage for a rolling element bearing, wherein the cage is configured to be guided by an outer ring of the rolling element bearing, wherein the cage comprises an outer cage radius which defines an outer circumference of the cage, wherein the cage comprises: a first limited region, wherein the outer cage radius remains within a limited range between a lower limit and an upper limit; a first protrusion region, wherein the cage comprises at least one point where the outer cage radius exceeds the upper limit, wherein the first protrusion region adjoins the first limited region in circumferential direction; a second limited region, wherein the cage outer radius remains within the limited range, wherein the second limited region adjoins the first protrusion region in circumferential direction; a second protrusion region, wherein the cage comprises at least one point where the outer cage radius exceeds the upper limit, wherein the second protrusion region adjoins the second limited region in circumferential direction, and the first limited region adjoins the second protrusion region in circumferential direction. It will be understood that any of the features or embodiments described herein can be applied to this cage.

For example, when the cage is guided by the outer ring, the dimensions of the cage, inner ring and outer ring are such that the outer circumference of the cage can only enter in contact with the inner circumference of the outer ring. The inner circumference of the cage does not have the possibility to enter in contact with the outer circumference of the inner ring.

In embodiments, the irregular cage radius is the inner cage radius, wherein in the first and the second protrusion region the irregular cage radius exceeds outside the limited range by being smaller than the lower limit. Optionally, the cage is configured to be guided by an inner ring of the rolling element bearing. When the cage is being guided by inner ring, any contact between the cage and rolling element bearing occurs with the inner ring. Therefore, the protrusion regions can be arranged to be smaller than the lower limit, to ensure that the contact of the cage is made with one of said protrusion regions.

In these embodiments, the cage can also be described as: a cage for a rolling element bearing, wherein the cage is configured to be guided by an inner ring of the rolling element bearing, wherein the cage comprises an inner cage radius which defines an inner circumference of the cage, wherein the cage comprises: a first limited region, wherein the inner cage radius remains within a limited range between a lower limit and an upper limit; a first protrusion region, wherein the cage comprises at least one point where the inner cage radius is smaller than the lower limit, wherein the first protrusion region 11 adjoins the first limited region in circumferential direction; a second limited region, wherein the cage inner radius remains within the limited range, wherein the second limited region adjoins the first protrusion region in circumferential direction; a second protrusion region, wherein the cage comprises at least one point where the inner cage radius is smaller than the lower limit, wherein the second protrusion region adjoins the second limited region in circumferential direction, and the first limited region adjoins the second protrusion region in circumferential direction. It will be understood that any of the features or embodiments described herein can be applied to this cage.

For example, when the cage is guided by the inner ring, the dimensions of the cage, inner ring and outer ring are such that the inner circumference of the cage can only enter in contact with the outer circumference of the inner ring. The outer circumference of the cage does not have the possibility to enter in contact with the inner circumference of the outer ring.

The invention further relates to a rolling element bearing comprising a cage according to any of the embodiments described herein. Optionally, the rolling element bearing is a roller bearing such as a cylindrical roller bearing, a spherical roller bearing or a tapered roller bearing. Optionally, the rolling element bearing is a ball bearing such as a single row ball bearing, a double row ball bearing, a deep groove ball bearing, an angular ball bearing, a self-aligning ball bearing, a three-point contact ball bearing, a four-point contact ball bearing. Optionally, the rolling element bearing has an outer ring and an inner ring, wherein an inner radius of the outer ring is greater than an outer radius of the inner ring. That is, the rolling element bearing is not a so-called thrust bearing or similar.

The Invention further relates to a satellite, a space probe, a turbo-pump (e.g. for a rocket engine), a turbo-reactor (e.g. for an airplane), or a space launcher comprising a rolling element bearing and/or a cage according to any of the embodiments described herein. These systems use cages and rolling element bearings is demanding conditions, e.g. where lubrication is hard or impossible and/or in vacuum, which may lead to cage failures. In addition, cage failures in these expensive and long-term projects can have big consequences. The invention advantageously reduces cage failures.

The invention further relates to a method. Although the method can relate to the cage and/or rolling element bearing according to the invention; neither the cage and/or rolling element bearing, nor the method are limited thereto. Features explained herein with reference to the cage and/or rolling element bearing have the same meaning with respect to the method unless explicitly defined otherwise. Features explained with reference to the cage and/or rolling element bearing can be applied mutatis mutandis to the method to achieve the similar advantages.

The object of the invention can e.g. be achieved with a method for designing a cage for a rolling element bearing, wherein optionally the rolling element bearing has an outer ring and an inner ring, wherein an inner radius of the outer ring is greater than an outer radius of the inner ring, wherein optionally the cage is according to any of the preceding claims, wherein the method comprises the following steps:
- defining an irregular cage radius, wherein the irregular cage radius is
   - an outer cage radius which defines an outer circumference of the cage, and/or
   - an inner cage radius which defines an inner circumference of the cage,
- designing a cage comprising
   - a first limited region, wherein the irregular cage radius remains within a limited range between a lower limit and an upper limit, wherein e.g. the first limited region covers at least a circumferential region of 90 degrees;
   - a first protrusion region, wherein the cage comprises at least one point where the irregular cage radius extends outside the limited range, wherein the first protrusion region adjoins the first limited region in circumferential direction;
   - a second limited region, wherein the irregular cage radius remains within the limited range, wherein the second limited region adjoins the first protrusion region in circumferential direction; wherein e.g. the second limited region covers at least a circumferential region of 90 degrees
   - a second protrusion region, wherein the cage comprises at least one point where the irregular cage radius extends outside the limited range, wherein the second protrusion region adjoins the second limited region in circumferential direction, and the first limited region adjoins the second protrusion region in circumferential direction.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig. 1a: schematically shows a rolling element bearing;
Fig. 1b: schematically shows the cross-section AA indicated in fig. 1a;
Fig. 1c: schematically shows a rolling element bearing;
Fig. 1d: schematically shows a cross-section of the rolling element bearing shown in fig. 1c;
Fig. 2a: schematically shows a cage according to the invention in side view;
Fig. 2b: schematically shows an enlarged view of the detail A from fig. 2a;
Fig. 2c-2d: schematically illustrate further views of the cage;
Fig. 3a: schematically illustrates how a cage can be designed when being guided by an outer ring;
Fig. 3b: schematically illustrates how a cage can be designed when being guided by an inner ring;
Fig. 4a-4b: schematically illustrate examples of cages;
Fig. 4c-4d: schematically illustrate examples of cages wherein the irregular cage radius is inconstant in the first and second limited region.

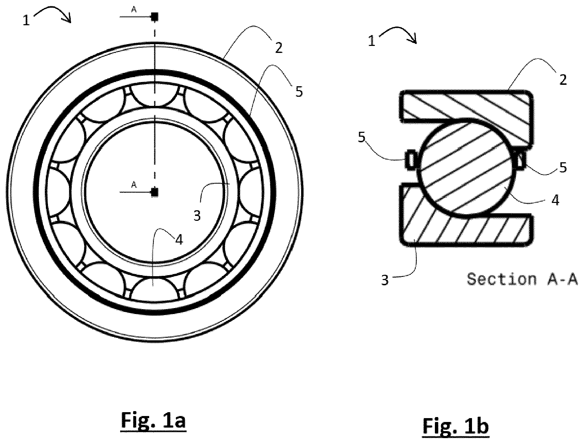

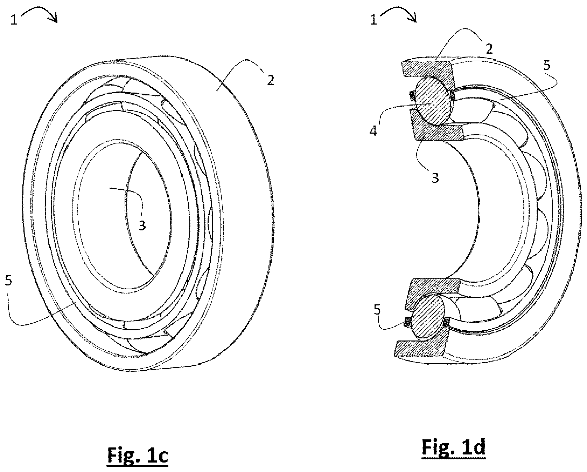

Fig. 1a-fig. 1d illustrate rolling element bearings 1, wherein fig. 1b shows the cross-section AA indicated in fig. 1b and fig. 1d shows a cross-section of the rolling element bearing 1 from fig. 1c. These figures are shown to illustrate rolling element bearings 1 in general and according to the prior art; however, from the description herein the skilled person will easily understand that by providing a cage according to the invention, the rolling element bearing 1 can be adapted to be in accordance with the invention.

The rolling element bearings 1 shown in figs. 1a-1d are ball bearings comprising a plurality of balls 4 as rolling elements. The balls 4 allow an outer ring 2 and an inner ring 3 (sometimes also referred to as outer race 2 and inner race 3) to be moved relative to each other. As such, a first element connected to the outer 2 can be rotated relative to a second element that is connected to the inner ring 3. A cage 5 is provided, which has a plurality of pockets for holding and positioning the balls 4. Fig. 1b illustrates that in this example the cage 5 is guided by the outer ring 2, although it is also possible that the cage 5 is guided by the inner ring 3.

During use, the cage 5 may rotate at high speed (high rpm). This may lead to dynamic instabilities of the cage 5, which eventually lead to (mechanical) failure. In applications where only marginal or even no lubrication can be provided, failures may occur even more. Failure of the cage 5 may render the complete rolling element bearing 1 unusable. This can in particular be a big problem when the rolling element bearing 1 is not easily replaceable, e.g. because the rolling element bearing 1 is in a device in outer space, such as a satellite or space probe. Also in other applications such failures may have large economic consequences, e.g. when a rolling element bearing 1 in an airplane fails.

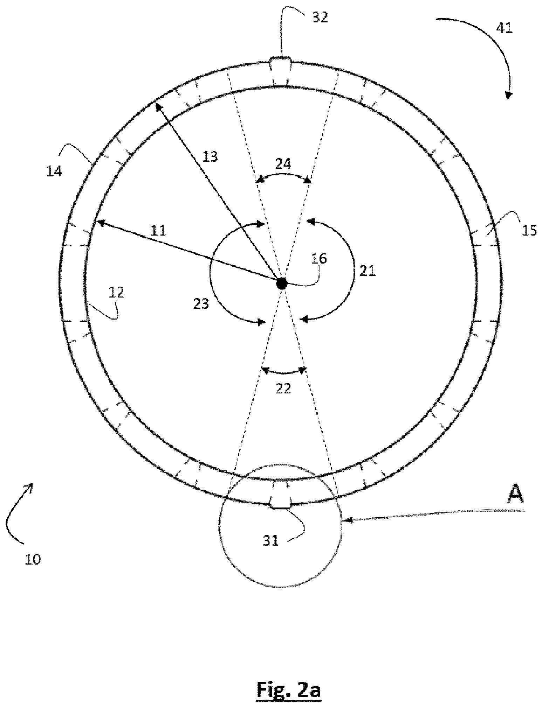

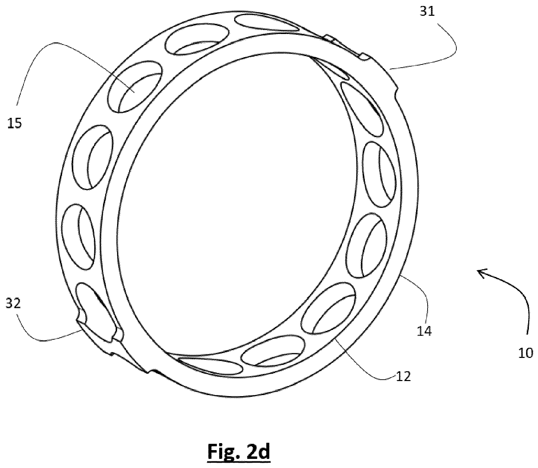

Fig. 2a-2d illustrate an example of a cage 10 according to the invention that can be used to reduce the dynamic instabilities and/or failures caused thereby. In this example the cage 10 is configured to be guided by the outer ring of the rolling element bearing 1. The cage 10 comprises an inner cage radius 11 which defines an inner circumference 12, and an outer cage radius 13 which defines an outer circumference 14. In this example, the inner cage radius 11 is regular and constant, as it is equal over the entire inner circumference 12. The outer cage radius 13, on the other hand, is an irregular cage radius 13. The irregularity of the irregular cage radius 13 is in this case embodied as a first protrusion 31 and a second protrusion 32, wherein the outer cage radius 13 is larger.

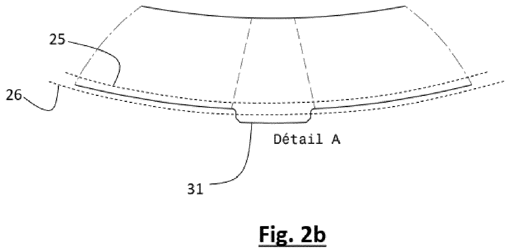

The detail A of fig. 2a including the first protrusion 31 is shown enlarged in fig. 2b. A lower limit 25 and an upper limit 26 are also indicated in fig. 2b. A limited range can be defined between the lower limit 25 and the upper limit 26. The first protrusion 31 extends outside of the limited range, by exceeding the upper limit 26. Although not explicitly indicated in fig. 2a, it is clear that the second protrusion 32 also exceeds the upper limit 26. Between the first 31 and second protrusion 32, the irregular cage radius 13 remains within the limited range.

Based on this, the cage 10 can be divided into four regions that are indicated in fig. 2a: a first limited region 21, a first protrusion region 22, a second limited region 23, and a second protrusion region 24. In the first 21 and second limited region 23, the irregular cage radius 13 remains within the limited range between the lower limit 25 and upper limit 26. In the first 22 and second protrusion region 24, the irregular cage radius 13 extends at least once outside the limited range, here with first 31 and second protrusion 32.

The regions 21, 22, 23, 24 are adjoining to each other when seen in a circumferential direction 41 and make up the entire cage 10. Thus, the cage 10 can be divided exactly into these four regions 21, 22, 23, 24. It has been found that having exactly two protrusion regions 22, 24 with two limited regions 21, 23 therebetween reduces the dynamic instabilities. If, during use, the cage 10 becomes unstable and deviates from its desired position, it will generally be the first 31 or second protrusion 32 that comes into contact with the outer ring of the rolling element bearing. This predefined and narrow contact surface reduces the cage instabilities.

It can further be seen in fig. 2a that, optionally, the first 22 and second protrusion region 24 are symmetric to each other, and the first 21 and second limited region 23 are symmetric to each other as well. In this case a centre point 16 of the cage 10 is a point of reflection, but it can be seen that also multiple lines of reflection could be drawn through the centre point 16.

The first 21 and second limited region 23 are larger than the first 22 and second protrusion region 24. In particular, the first 21 and second limited region 23 both cover a circumferential region of larger than 90 degrees, in this case even larger than 120 degrees, when seen in the circumferential direction 41.

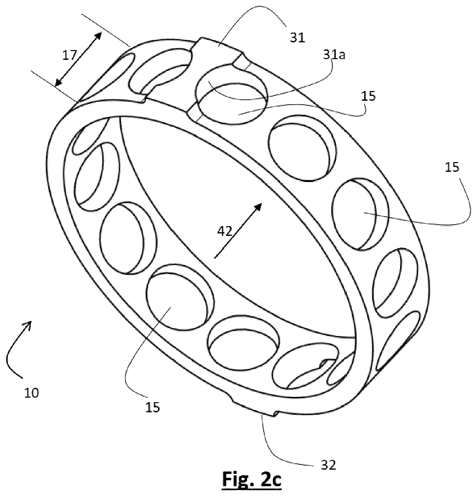

Best visible in fig. 2c-2d is that the cage 10 comprises a plurality of pockets 15 for the rolling elements. In this case the pockets 15 define a circular opening since the rolling elements are balls, such that the cage 10 can be used for a ball bearing. However, the invention can be applied in similar manner to other types of rolling element bearings, e.g. having cylindrical rolling elements. Although the cage 10 in the shown example comprises a single row of pockets 15, it is also possible that the cage 10 comprises multiple rows of pockets 15.

As indicated in fig. 2c, a width 17 of the cage 10 can be defined in a longitudinal direction 42. In the shown example the first protrusion 31 and the second protrusion 32 extend over the entire width 17 of the cage 10, with the exception of recesses 31a for the pockets 15. However, it is also possible that the first 31 and/or second protrusion 32 is only provided over a part, e.g. half, of the width 17. This can e.g. be determined in function of how the outer ring guides the cage 10.

In the shown example, the irregular cage radius and thus the height of the first 31 and second protrusion 32 is constant when seen over the width 17, of course with exception for the pockets 15. However, this is not required.

It is noted that although in this example the inner cage radius 11 is regular and constant, this is not required. For example, it is possible that a thickness of the cage 10 (defined between the outer circumference 14 and the inner circumference 12) is constant, such that the inner cage radius 11 has the same irregularities as the outer cage radius 13.

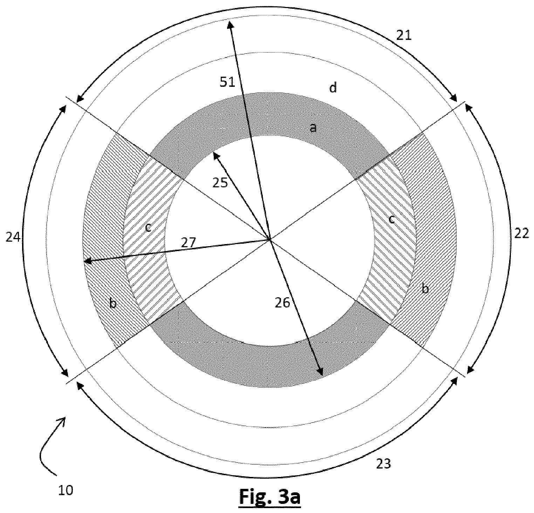

Fig. 3a illustrates how the cage 10 can be designed, e.g. for a cage 10 that is configured to be guided by an outer ring of the rolling element bearing. The irregular cage radius may in this case thus be the outer cage radius. The lower limit 25 and upper limit 26 are indicated. In the first 21 and second limited region 23, the irregular cage radius stays within the limited range between the lower 25 and upper limit 26. Thus, the irregular cage radius stays within the area indicated by a in fig. 3a, and will for example not exceed into the area indicated by d. It is noted, however, that the limited range in the area a still allows the irregular cage radius to be inconstant in the first 21 and second limited region 23. In fact, such implementation may provide additional advantages.

In the first 22 and second protrusion region 24, the irregular cage radius exceeds the upper limit 26 and as such is on at least one point in the area indicated by b. It is noted however, that the irregular cage radius can also still be in the limited range, indicated as area c, at other points in the first 22 and second protrusion region 24.

Fig. 3a thus illustrates an example where the irregular cage radius is the outer cage radius and in the protrusion regions 22, 24 the irregular cage radius exceeds the upper limit 26. In this case, the lower limit 25 can be selected in function of the thickness of the cage 10, the outer radius of the inner ring of the rolling element bearing, and the required space between the cage 10 and the inner ring. This is in practice quite similar to the design of a conventional cage.

Fig. 3a further illustrates an inner radius 51 of the outer ring of the rolling element bearing, and a protrusion limit 27 which illustrates a maximal limit for the irregular cage radius in the first 22 and second protrusion region 24. The protrusion limit 27 is preferably a bit smaller than the inner radius 51, to ensure some space between the cage 10 and the outer ring (when all components are correctly centred) to avoid unnecessary friction during rotation. The distance between the protrusion limit 27 and the inner radius 51 may also be chosen similar to the design of a conventional cage.

As a way of example, the distance between the lower limit 25 and the protrusion limit 27 can be divided in three zones. The first zone (indicated as areas a and c) defines the limited range between the lower limit 25 and the upper limit 26. The second zone in defined between the upper limit 26 and the protrusion limit 27, where the irregular cage radius may only extend in the protrusion regions 22, 24 (indicated by area b) but not in the limited regions 21, 23 (indicated by area d). The third zone is defined between the protrusion limit 27 and the inner radius 51, where the irregular cage radius does not extend into.

By way of example, first zone (i.e. the distance between the upper limit 26 and the lower limit 25) can be chosen to ensure that the thickness of the cage 10 in the limited regions 21, 23 provides sufficient strength. This may depend on the application, but is generally similar as in conventional cage designs. The third zone (i.e. the distance between the protrusion limit 27 and the inner radius 51) can be chosen to allow sufficient space during use between the cage 10 and the outer ring. The second zone (i.e. the distance between the upper limit 26 and the protrusion limit 27) may be chosen equal to the third zone. Although not shown on scale in the figure for the sake of clarity, the first zone may in practice be a few orders of magnitude larger than the second and third zone.

As another way of example, the upper limit 26 can be chosen in function of the inner radius 51 and the design of the irregular cage radius in the protrusion regions 22, 24. The goal in this example is that any contact between the outer ring and the cage can only occur with the protrusions in the protrusion regions 22, 24. It will be understood that various designs are possible, which can easily be implemented by the skilled person based on the actual situation.

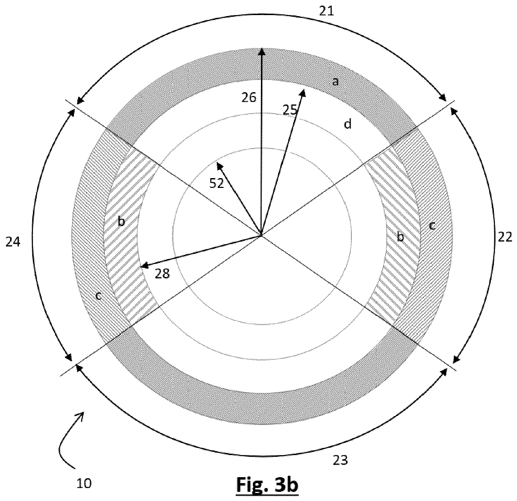

Fig. 3b illustrates in similar manner how the cage 10 can be designed, e.g. for a cage 10 that is configured to be guided by an inner ring of the rolling element bearing. The irregular cage radius may in this case thus be the inner cage radius. In the first 21 and second limited region 23, the irregular cage radius stays within the limited range between the lower 25 and upper limit 26, corresponding with the area indicated by a in fig. 3a, and will for example not exceed into the area indicated by d. In the first 22 and second protrusion region 24, the irregular cage radius becomes on at least one point smaller than the lower limit 25 to extend into the area indicated by b.

Fig. 3b thus illustrates an example where the irregular cage radius is the inner cage radius and in the protrusion regions 22, 24 the irregular cage radius is smaller than the lower limit 25. In this case, the upper limit 26 can be selected in function of the thickness of the cage 10, the inner radius of the outer ring of the rolling element bearing, and the required space between the cage 10 and the outer ring. This is in practice quite similar to the design of a conventional cage.

Fig. 3b further illustrates an outer radius 52 of the inner ring of the rolling element bearing, and a protrusion limit 28 which illustrates a minimal limit for the irregular cage radius in the first 22 and second protrusion region 24. The distance between the protrusion limit 28 and the outer radius 52 may also be chosen similar to the design of a conventional cage, to avoid unnecessary friction.

Again as a way of example, the distance between the upper limit 26 and the outer radius 52 can be divided in three zones, and the lower limit 25 can be defined as halfway between the upper limit 26 and the protrusion limit 28. Here, the same reasoning is applied as explained with reference to fig. 3a, mutatis mutandis.

Again as another way of example, the lower limit 25 can be chosen in function of the outer radius 52 and the design of the irregular cage radius in the protrusion regions 22, 24, such that any contact between the inner ring and the cage can only occur with the protrusions in the protrusion regions 22, 24.

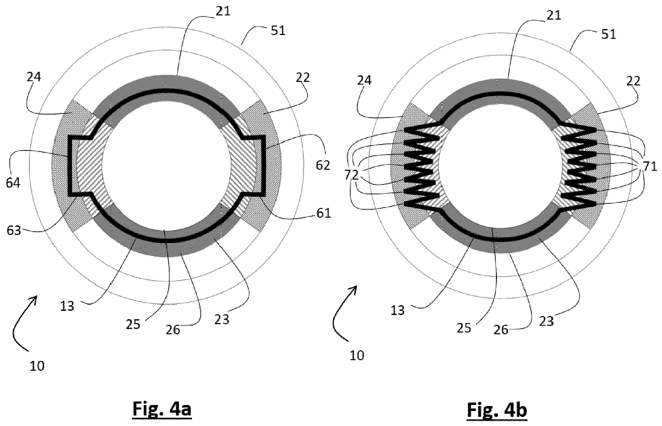

Fig. 4a-4d illustrate examples of possible implementations of cages 10 according to the invention. These examples relate to cages 10 where the irregular cage radius 13 is the outer cage radius 13 which extend outside of the limited range by exceeding the upper limit 26. It will be understood, however, that similar embodiments can be applied to cages having the inner cage radius as irregular cage radius.

Fig. 4a shows an example where the irregular cage radius 13 is constant in the first 21 and second limited region 23. In both the first 22 and second protrusion region 24, the irregular cage radius 13 extends outside the limited range with a single protrusion 61, 62. A first protrusion 61 comprises a first plateau 62 and a second protrusion 63 comprises a second plateau 64, in this case with a straight extension 61, 63 from the limited range towards the plateau 62, 64.

Fig. 4b illustrates an example where the irregular cage radius 13 is also constant in the first 21 and second limited region 23. In this case in the first protrusion region 22 comprises a plurality of protrusions 71, and the second protrusion region 24 also comprises a plurality of protrusions 72. In this case seven protrusions 71, 72 are provided each time, however other quantities of protrusions 71, 72 are also possible. Between two subsequent protrusions 71 or 72, the irregular cage radius 13 returns back into the limited range.

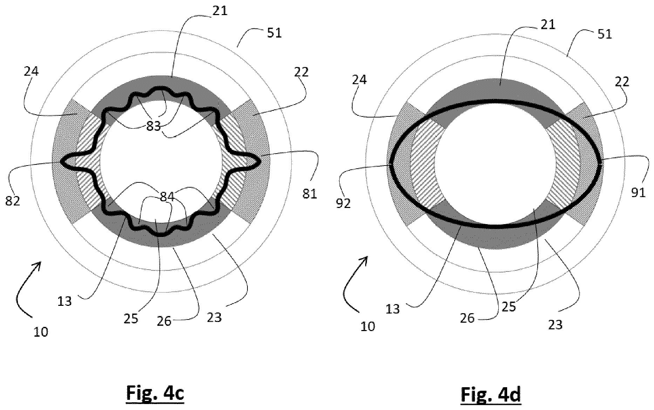

Fig. 4c illustrates an example where the irregular cage radius 13 is inconstant in the limited regions 21, 23. As can be seen, the first limited region 21 comprises a plurality of bumps 83, and the second limited region 23 also comprises a plurality of bumps 84. It has been found that this may further reduce the dynamic instabilities of the cage 10. Fig. 4c illustrates further that the first protrusion region 22 comprises a single first protrusion 81 and the second protrusion region 24 comprises a single second protrusion 82. In this example the first 81 and second protrusion 82 do not comprise a plateau, but rather have a conical shape with a tip.

Fig. 4d illustrates an example where the irregular cage radius 13 has an ellipse shape. The irregular cage radius 13 is thus inconstant in the limited regions 21, 23, and has a single protrusion 91, 92 in both the first 22 and the second protrusion region 24.

Figs. 4a-4d further all show that the first 21 and second limited regions 23 are larger than the first 22 and second protrusion regions 24. The limited regions 21, 23 are larger than 90 degrees, even larger than 120 degrees, when seen in the circumferential direction. It can also be seen that in the examples the protrusion regions 22, 24 are symmetric to each other, and the limited regions 21, 23 are also symmetric to each other.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

## Claims

1. A cage (10) for a rolling element bearing (1), wherein the rolling element bearing has an outer ring (2) and an inner ring (3), wherein an inner radius (51) of the outer ring is greater than an outer radius (52) of the inner ring, wherein the cage comprises an irregular cage radius (11, 13), wherein the irregular cage radius is
• an outer cage radius (13) which defines an outer circumference (14) of the cage, and/or
• an inner cage radius (11) which defines an inner circumference (12) of the cage,
wherein the cage comprises:
• a first limited region (21), wherein the irregular cage radius remains within a limited range between a lower limit (25) and an upper limit (26);
• a first protrusion region (22), wherein the cage comprises at least one point where the irregular cage radius extends outside the limited range, wherein the first protrusion region adjoins the first limited region in circumferential direction;
• a second limited region (23), wherein the irregular cage radius remains within the limited range, wherein the second limited region adjoins the first protrusion region in circumferential direction;
• a second protrusion region (24), wherein the cage comprises at least one point where the irregular cage radius extends outside the limited range, wherein the second protrusion region adjoins the second limited region in circumferential direction, and the first limited region adjoins the second protrusion region in circumferential direction.

2. The cage according to claim 1, wherein the irregular cage radius is inconstant in the first and second limited region, when seen in circumferential direction.

3. The cage according to claim 1 or claim 2, wherein
• the first limited region covers at least a circumferential region of 90 degrees, for example at least 120 degrees, for example at least 150 degrees; and
• wherein the second limited region covers at least a circumferential region of 90 degrees, for example at least 120 degrees, for example at least 150 degrees.

4. The cage according to any of the preceding claims, wherein the first protrusion region and the second protrusion region are symmetric, and optionally also the first limited region and the second limited region are symmetric.

5. The cage according to any of the preceding claims, wherein the first and second protrusion region each comprise a single protrusion (62, 64, 81, 82, 91, 92) extending outside the limited range.

6. The cage according to any of the claims 1-4, wherein the first and second protrusion region each comprise a plurality of protrusion (71, 72) extending outside the limited range.

7. The cage according to any claims 1 or 3-6, wherein the irregular cage radius is constant in the first and second limited regions.

8. The cage according to any of the preceding claims, wherein the cage is configured to be used in a non-lubricated rolling element bearing or in a marginally lubricated rolling element bearing.

9. The cage according to any of the preceding claims, wherein the irregular cage radius is the outer cage radius, wherein in the first and the second protrusion region the irregular cage radius exceeds outside the limited range by exceeding the upper limit.

10. The cage according to claim 9, wherein the cage is configured to be guided by the outer ring of the rolling element bearing.

11. The cage according to any of the claims 1-8, wherein the irregular cage radius is the inner cage radius, wherein in the first and the second protrusion region the irregular cage radius exceeds outside the limited range by being smaller than the lower limit.

12. The cage according to claim 11, wherein the cage is configured to be guided by the inner ring of the rolling element bearing.

13. A rolling element bearing comprising a cage according to any of the preceding claims, wherein the rolling element bearing has an outer ring and an inner ring, wherein an inner radius of the outer ring is greater than an outer radius of the inner ring, wherein optionally the rolling element bearing is one of:
• a roller bearing such as a cylindrical roller bearing, a spherical roller bearing or a tapered roller bearing or
• a ball bearing such as a single row ball bearing, a double row ball bearing, a deep groove ball bearing, an angular ball bearing, a self-aligning ball bearing, a three-point contact ball bearing, a four-point contact ball bearing.

14. A satellite, a space probe, a turbo-pump, or a space launcher comprising a rolling element bearing and/or a cage according to any of the preceding claims.

15. A method for designing a cage for a rolling element bearing, wherein the rolling element bearing has an outer ring and an inner ring, wherein an inner radius of the outer ring is greater than an outer radius of the inner ring, wherein optionally the cage is according to any of the preceding claims, wherein the method comprises the following steps:
• defining an irregular cage radius, wherein the irregular cage radius is
• an outer cage radius which defines an outer circumference of the cage, and/or
• an inner cage radius which defines an inner circumference of the cage,
• designing a cage comprising
• a first limited region, wherein the irregular cage radius remains within a limited range between a lower limit and an upper limit;
• a first protrusion region, wherein the cage comprises at least one point where the irregular cage radius extends outside the limited range, wherein the first protrusion region adjoins the first limited region in circumferential direction;
• a second limited region, wherein the irregular cage radius remains within the limited range, wherein the second limited region adjoins the first protrusion region in circumferential direction;
• a second protrusion region, wherein the cage comprises at least one point where the irregular cage radius extends outside the limited range, wherein the second protrusion region adjoins the second limited region in circumferential direction, and the first limited region adjoins the second protrusion region in circumferential direction.
